# FASCICULE DE BREVET EUROPEEN

(11) **EP 0 724 270 B1**
(45) Date de publication et mention de la délivrance du brevet: **15.07.1998**
(21) Numéro de dépôt: 96400203.4
(22) Date de dépôt: 29.01.1996
(51) Int. Cl.: G21C 3/07

(54) **Tube en alliage à base de zirconium pour assemblage combustible nucléaire et procédé de fabrication d'un tel tube**
Hüllrohr aus Zirkoniumlegierung für Kernbrennstabbündel und Verfahren zur Herstellung desselben
Zirconium alloy tube for nuclear fuel assembly and procedure to fabricate such a tube

(30) Priorité: 30.01.1995 FR 9501026
(43) Date de publication de la demande: 31.07.1996
(73) Titulaire: FRAMATOME, 92400 Courbevoie (FR); COMPAGNIE GENERALE DES MATIERES NUCLEAIRES, F-78140 Velizy Villacoublay (FR)
(72) Inventeur: Mardon, Jean-Paul, F-69300 Caluire (FR); Sevenat, Jean, F-44250 Saint-Brevin-Les-Bains (FR); Charquet, Daniel, c/o Cezus, F-73400 Ugine (FR)
(74) Mandataire: Fort, Jacques

(56) Documents cités:
- EP-A- 0 085 553
- EP-A- 0 301 295
- EP-A- 0 380 381
- EP-A- 0 622 470
- PATENT ABSTRACTS OF JAPAN vol. 014, no. 513 (C-0777) 09 Novembre 1990 & JP-A-02 213 437 (NIPPON NUCLEAR FUEL DEV CO LTD) 24 Août 1990

## Description

La présente invention concerne les tubes en alliage à base de zirconium destinés à être utilisés dans les assemblages combustibles nucléaires. De tels tubes sont en particulier utilisables pour constituer des gaines de crayons de combustible, la partie externe de telles gaines, ou des tubes guides destinés à recevoir des crayons appartenant à des grappes de commande.

On utilise fréquemment, pour constituer de telles gaines, des tubes en alliage dit "Zircaloy 4", contenant, en plus du zirconium, 1,2 à 1,7 % en poids d'étain, 0,16 à 0,24 % en poids de fer, 0,07 à 0,13 % en poids de chrome et 0,10 à 0,18 % en poids d'oxygène. On a également proposé de nombreux alliages dérivés des précédents et notamment des alliages dans lesquels le chrome est remplacé, en tout ou partie, par du vanadium et/ou dans lesquels la teneur en oxygène dépasse celle donnée ci-dessus avec, corrélativement, une diminution de la teneur en certains autres éléments d'addition.

On connaît également (JP-A-02 213 437) un alliage de gaine à base de zirconium résistant à la corrosion nodulaire, contenant de l'étain, du fer, du vanadium et des impuretés dont l'oxygène à une teneur ne dépassant pas 1000 ppm.

Le document EP-A-0 380 381 décrit plusieurs compositions de gaine "duplex" dont l'une comporte, en plus d'étain et de fer, une teneur en vanadium de 0,25 à 0,35% ; l'oxygène est également mentionné, avec une teneur comparable à celle donnée pour les "Zircaloy 4".

Enfin le document EP-A-0 085 553 donne des compositions d'alliage d'où il ressort que l'on peut trouver une valeur moyenne de 147 ppm de carbone et 82 ppm de silicium dans un lingot. Mais ces teneurs ne sont pas contrôlées.

Les qualités requises pour un tube utilisé comme gaine sont notamment une bonne résistance à la corrosion par l'eau sous haute pression et à haute température, un fluage à long terme limité, une conservation des caractéristiques mécaniques à long terme et un grandissement sous irradiation limité ; ces propriétés doivent par ailleurs être obtenues de façon constante et l'alliage utilisé doit avoir des propriétés métallurgiques aux divers stades d'élaboration (laminabilité notamment) réduisant le taux de rebut à une valeur acceptable.

Dans le but d'atteindre l'ensemble de ces résultats, il est proposé un tube selon la revendication 1.

Le vanadium est essentiellement présent dans des précipités fins sous la forme Zr(Fe,V)₂.

Le choix d'une composition précise dans la plage ci-dessus dépendra des propriétés que l'on souhaite favoriser en priorité. Des teneurs généralement avantageuses vont de 0,4 à 0,6 % d'étain, de 0,6 à 0,7 % de fer, de 0,37 à 0,43 % de vanadium, de 0,10 à 0,14 % d'oxygène, de 120 à 160 ppm de carbone et de 85 à 115 ppm de silicium. Souvent un alliage à 0,5 % Sn, 0,65 % Fe, 0,4 % V, 0,12 % O₂, 140 ppm C et 100 ppm Si constituera un bon compromis.

Dans tous les cas, la présence de vanadium au lieu de chrome couramment utilisé réduit la fraction d'hydrogène absorbé et améliore la teneur à la corrosion en milieu aqueux à haute température et haute pression, même en cas d'ébullition localisée.

Il est à noter que l'homme de métier avait un préjugé à l'encontre de l'emploi d'alliages à plus de 0,25 % de vanadium pour constituer des tubes (EP-A-0 301 295).

Si l'impératif prioritaire est de réduire le plus possible le fluage au cours de la phase initiale de l'utilisation en réacteur, il pourra être avantageux d'augmenter la teneur en étain, en carbone et/ou en oxygène. On ajuste la teneur en carbone de telle sorte qu'elle soit supérieure à 100 ppm, ce qui est favorable au fluage et inférieure à 180 ppm, valeur à partir de laquelle le phénomène de grandissement sous irradiation devient trop important. La teneur en silicium est "contrôlée" pour tirer parti de son effet de régulation des structures et de son influence favorable sur le comportement à la corrosion. Au-dessous de 50 ppm, la cinétique de corrosion s'accélère notablement. Au-delà de 120 ppm, il y a de nouveau une augmentation. Par ailleurs, une teneur supérieure à 120 ppm fait apparaître des composés du type siliciure défavorables à la mise en forme à chaud. Le caractère recristallisé de l'alliage contribue à un bon comportement en fluage.

Un rapport Fe/V élevé, supérieur à 2/1, permet d'améliorer encore la tenue à la corrosion dans un milieu contenant du lithium.

Une valeur élevée de la somme Fe+V contribue à l'affinement du grain de la structure métallurgique, qui est un facteur de la bonne tenue à la corrosion sous contrainte.

L'invention propose également un procédé de fabrication de tube en un alliage du type défini ci-dessus et conforme à l'objet de la revendication 3.

Le premier recuit, après trempe, est avantageusement réalisé vers 730°C ; le second, après filage, est avantageusement réalisé vers 700°C.

Le tube ainsi réalisé ne subit plus de traitement thermique modifiant sa structure métallurgique jusqu'au moment où il est utilisé comme tube de gainage ou tube-guide. En revanche, il reçoit encore des traitements de surface, et il est soumis à un examen. Le traitement de surface peut notamment comporter un sablage et un décapage chimique, suivi d'un rinçage. Le traitement de surface peut être complété par un polissage à l'aide d'une roue. Le contrôle est effectué de façon classique visuellement, par ultra-sons, et/ou par courant de Foucault.

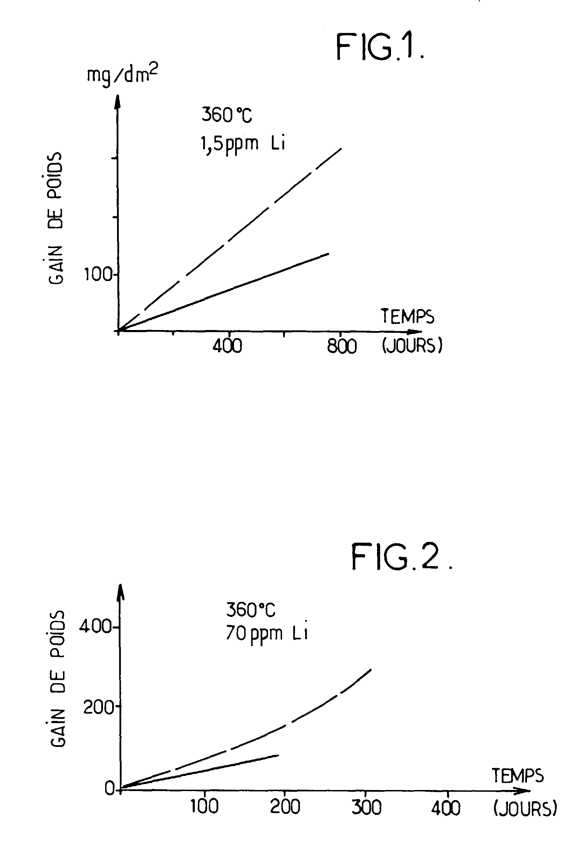

D'autres caractéristiques apparaîtront mieux à la lecture de la description qui suit et se réfère aux dessins qui l'accompagnent, dans lesquels les figures 1 et 2 sont des courbes représentant l'évolution de l'oxydation en fonction du temps d'exposition.

Une composition intéressante, qui est concernée par les résultats d'essais ci-après, s'est révélée la suivante :
- étain : 0,5 %
- fer : 0,65 %
- vanadium : 0,4 %
- oxygène : 0,12 % (pouvant être porté jusqu'à 0,14 % lorsque la tenue au fluage à haute température est essentielle)
- carbone : 140 ppm (pour améliorer la tenue au fluage)
- silicium : 100 ppm
les autres composants étant le zirconium et les impuretés.

Les teneurs ci-dessus sont des teneurs nominales. Les tolérances de fabrication et les écarts de composition au sein d'un lingot conduisent, pour cette composition nominale, à des valeurs qui restent toujours dans les fourchettes avantageuses données ci-dessus.

L'alliage de départ se présente sous forme d'un lingot. Par forgeage ou laminage, il est mis sous forme d'une barre qui, après chauffage en phase β, est trempée à l'eau à vitesse contrôlée pour l'amener dans le domaine α, par exemple avec une vitesse de refroidissement comprise entre 5°C par seconde et 30°C par seconde jusqu'à moins de 800°C environ. Le recuit après trempe est réalisé à une température inférieure à 800°C pour amener la barre en phase α et l'y maintenir. Après usinage d'une billette tubulaire, le filage s'effectue après chauffage entre 600 et 750°C. L'ébauche filée, après avoir subi éventuellement un recuit inférieur à 800°C, subit ensuite le nombre de laminages successifs à froid requis pour amener le tube à l'épaisseur requise, avec des recuits intermédiaires sous argon, permettant d'arriver à un ΣA convenable. Enfin, un recuit final de recristallisation est effectué en atmosphère inerte vers 580°C.

Des essais ont été effectués sur des tubes ainsi obtenus dans le but de les comparer à des tubes en des alliages dont la composition rentre dans la catégorie des Zircaloy 4 ; c'est-à-dire des alliages qu'on utilise généralement à l'état détendu.

### Corrosion uniforme

Les essais de corrosion effectués pendant trois cycles d'irradiation en réacteur à eau sous pression, jusqu'à un taux de combustion de 42 GWj/t ont montré un gain d'au moins 50 % par rapport aux Zircaloy 4 précédemment utilisés. L'examen ultérieur en cellule chaude n'a pas mis en évidence de corrosion hétérogène ou localisée.

### Corrosion en présence de lithium

Les figures 1 et 2 montrent les résultats d'essais effectués en autoclave à 360°C et pour des teneurs en lithium de 1,5 et 70 ppm. La courbe en tirets représente l'augmentation de poids d'un alliage de type Zircaloy 4. La courbe en traits pleins donne l'augmentation de poids d'un alliage suivant l'invention. On constate une cinétique de corrosion beaucoup plus faible.

### Résistance à l'hydruration

Des essais ont été effectués en cellule chaude sur des tubes de gainage après irradiation pendant trois cycles en réacteur à eau sous pression. Après une irradiation de 38 GWj/t les teneurs en hydrogène relevé ont été de 94 et 115 ppm pour l'alliage suivant l'invention, de 163 ppm pour 306 GWj/t pour du Zircaloy 4 utilisé comme référence.

### Comportement mécanique-ductilité

Les essais ont montré que la résistance mécanique de l'alliage était très légèrement inférieure à celle d'un Zircaloy 4 jusqu'à ce que le taux de combustion ait atteint l'équivalent d'un cycle d'irradiation. Après deux cycles d'irradiation la résistance mécanique est équivalente, ou même légèrement meilleure pour l'alliage suivant l'invention.

L'allongement total en traction de l'alliage suivant l'invention, représentatif de la ductilité, reste toujours égal ou supérieur à celle du Zircaloy 4.

### Comportement en présence d'iode

La susceptibilité à la corrosion sous contrainte en présence d'iode de l'alliage suivant l'invention s'est révélée nulle, alors que le Zircaloy 4 subit des dommages, aussi bien à l'état recristallisé qu'à l'état détendu.

En résumé, l'alliage suivant l'invention apporte un gain important en corrosion uniforme et surtout il a une faible sensibilité au lithium ; il fait preuve d'une résistance remarquable à la corrosion sous contrainte ; il conserve une ductilité élevée après plusieurs cycles d'irradiation.

## Revendications

1. Tube en alliage à base de zirconium destiné à constituer tout ou partie d'une gaine ou un tube guide d'assemblage combustible, caractérisé en ce que l'alliage contient, en poids, 0,4 à 0,6 % d'étain, 0,5 à 0,8 % de fer, 0,35 à 0,75 % de vanadium et 0,10 à 0,18 % d'oxygène, les teneurs en carbone et en silicium étant respectivement entre 100 et 180 ppm et entre 50 et 120 ppm, l'alliage ne contenant, de plus, que du zirconium et des impuretés inévitables, et l'alliage étant complètement recristallisé.

2. Tube selon la revendication 1, caractérisé en ce que l'alliage contient de 0,4 à 0,6 % d'étain, de 0,6 à 0,7 % de fer, de 0,37 à 0,43 % de vanadium, de 0,10 à 0,14 % d'oxygène, de 120 à 160 ppm de carbone et de 85 à 115 ppm de silicium.

3. Procédé de fabrication de tube comprenant successivement : la coulée d'un lingot en alliage à base de zirconium qui contient, en poids, 0,4 à 0,6 % d'étain, 0,5 à 0,8 % de fer, 0,35 à 0,75 % de vanadium et 0,10 à 0,18 % d'oxygène, les teneurs en carbone et en silicium étant respectivement entre 100 et 180 ppm et entre 50 et 120 ppm, l'alliage ne contenant, de plus, que du zirconium et des impuretés inévitables ; le forgeage à l'état de barre pleine ; la trempe de la barre préalablement chauffée en phase β ; un recuit éventuel en phase α entre 640°C et 760°C ; un filage après formation d'une billette percée en ébauche tubulaire ; un recuit éventuel en phase α entre 640 et 760°C; des laminages successifs à froid sous forme de tubes d'épaisseur décroissante, avec traitements thermiques intermédiaires sous atmosphère inerte ou sous vide à une température comprise entre 640 et 760°C, avantageusement vers 730°C pour les deux premiers et 700°C pour les suivants, et un recuit final de recristallisation en atmosphère inerte ou sous vide entre 550 et 650°C, l'ensemble des traitements thermiques étant tels que ΣA soit compris entre 10⁻¹⁸ et 10⁻¹⁶.

4. Procédé selon la revendication 3, caractérisé en ce que le recuit final est entre 565°C et 595°C.

5. Procédé selon la revendication 3 ou 4, caractérisé en ce que le premier recuit, après trempe, est effectué vers 730°C.

6. Procédé selon la revendication 3, 4 ou 5, caractérisé en ce que le second recuit après filage, est effectué vers 700°C.

## Patentansprüche

1. Rohr aus Zirkoniumbasislegierung, das zur Bildung der Gesamtheit oder eines Teils einer Hülle oder eines Führungsrohres eines Brennstoffbündels bestimmt ist,
dadurch gekennzeichnet,
daß die Legierung gewichtsmäßig 0,4 bis 0,6 % Zinn, 0,5 bis 0,8 % Eisen, 0,35 bis 0,75 % Vanadin und 0,10 bis 0,18 % Sauerstoff enthält, wobei die Gehalte an Kohlenstoff und an Silizium zwischen 100 und 180 ppm bzw. zwischen 50 und 120 ppm liegen, die Legierung außerdem nur Zirkonium und unvermeidliche Verunreinigungen enthält und die Legierung vollständig rekristallisiert ist.

2. Rohr nach dem Anspruch 1,
dadurch gekennzeichnet,
daß die Legierung 0,4 bis 0,6 % Zinn, 0,6 bis 0,7 % Eisen, 0,37 bis 0,43 % Vanadin, 0,10 bis 0,14 % Sauerstoff, 120 bis 160 ppm Kohlenstoff und 85 bis 115 ppm Silizium enthält.

3. Verfahren zur Rohrherstellung, das nacheinander aufweist:
Das Gießen eines Blocks aus Zirkoniumbasislegierung, die gewichtsmäßig 0,4 bis 0,6 % Zinn, 0,5 bis 0,8 % Eisen, 0,35 bis 0,75 % Vanadin und 0,10 bis 0,18 % Sauerstoff enthält, wobei die Gehalte an Kohlenstoff und an Silizium zwischen 100 und 180 ppm bzw. zwischen 50 und 120 ppm liegen und die Legierung außerdem nur Zirkonium und unvermeidliche Verunreinigungen enthält; das Schmieden im Vollstangenzustand; das Abschrecken der vorher zur β-Phase erhitzten Stange; ein eventuelles Anlassen in α-Phase zwischen 640 °C und 760 °C; ein Strangpressen zur Bildung einer als rohrförmiger Rohling durchbohrten Stange; ein eventuelles Anlassen in α-Phase zwischen 640 und 760 °C; aufeinanderfolgende Kaltwalzungen in Form von Rohren abnehmender Dicke mit Zwischenwärmebehandlungen in inerter Atmosphäre oder unter Vakuum bei einer Temperatur im Bereich von 640 bis 760 °C, vorzugsweise bei 730 °C für die beiden ersten und 700 °C für die folgenden; und ein Endanlassen zur Rekristallisation in inerter Atmosphäre oder unter Vakuum zwischen 550 und 650 °C, wobei die Gesamtheit der Wärmebehandlungen derart ist, daß ΣA im Bereich von 10⁻¹⁸ bis 10⁻¹⁶ ist.

4. Verfahren nach dem Anspruch 3,
dadurch gekennzeichnet,
daß das Endanlassen zwischen 565 °C und 595 °C erfolgt.

5. Verfahren nach dem Anspruch 3 oder 4,
dadurch gekennzeichnet,
daß das erste Anlassen nach dem Abschrecken nahe 730 °C durchgeführt wird.

6. Verfahren nach dem Anspruch 3, 4 oder 5,
dadurch gekennzeichnet,
daß das zweite Anlassen nach dem Strangpressen nahe 700 °C durchgeführt wird.

## Claims

1. A zirconium-based alloy tube for constituting all or a portion of a cladding or guide tube for a fuel assembly, characterized in that the alloy contains, by weight, 0.4% to 0.6% of tin, 0.5% to 0.8% of iron, 0.35% to 0.75% of vanadium, and 0.10% to 0.18% of oxygen, the carbon and silicon contents being respectively in the range 100 to 180 ppm and in the range 50 ppm to 120 ppm, the alloy containing nothing else apart from zirconium and unavoidable impurities, and the alloy being completely recrystallized.

2. A tube according to claim 1, characterized in that the alloy contains 0.4% to 0.6% tin, 0.6% to 0.7% iron, 0.37% to 0.43% vanadium, 0.10% to 0.14% oxygen, 120 ppm to 160 ppm carbon and 85 ppm to 115 ppm silicon.

3. A process for the production of a tube, comprising, successively : casting an ingot of a zirconium based alloy which contains, by weight, o.4% to 0.6% of tin, 0.5% to 0.8% of iron, 0.35% to 0.75% of vanadium, and 0.10% to 0.18% of oxygen, the carbon and silicon contents being respectively in the range 100 to 180 ppm and in the range 50 ppm to 120 ppm, the alloy containing nothing else apart from zirconium and unavoidable impurities ; forging to a solid bar; quenching the heated bar in β phase ; optionally annealing in the range 640°C to 760°C in α phase ; after forming, drawing a pierced billet to a tubular blank ; optionally annealing in the range 640°C to 760°C in α phase ; carrying out successive cold rolling steps to form tubes of decreasing thickness, with intermediate heat treatments in an inert atmosphere or in a vacuum at a temperature in the range 640°C to 760°C, advantageously about 730°C for the first two treatments and 700°C for subsequent treatments; and finally recrystallization annealing in an inert atmosphere or in a vacuum at a temperature in the range 550°C to 650°C, the set of heat treatments being such that the heat treatment parameter ΣSA is in the range 10⁻¹⁸ to 10⁻¹⁶.

4. A process according to claim 3, characterized in that the final annealing step is in the range 565°C to 595°C.

5. A process according to claim 3 or 4, characterized in that the first annealing step, after quenching, is carried out at about 730°C.

6. A process according to claim 3, 4, or 5, characterized in that the second annealing step, after drawing, is carried out at about 700°C.
